# EUROPEAN PATENT APPLICATION

(11) **EP 4 564 576 A2**
(43) Date of publication of application: **04.06.2025**
(21) Application number: 24215923.4
(22) Date of filing: 27.11.2024
(51) Int. Cl.: H01M 50/446, H01M 50/449, H01M 50/414, H01M 50/417, H01M 50/426, H01M 50/434, H01M 50/443, H01M 50/491, H01M 50/494, H01M 50/497, H01M 10/0525

(54) **SEPARATOR, BATTERY, AND ELECTRIC DEVICE**

(30) Priority: 30.11.2023 CN 202323305098 U
(71) Applicant: BYD Company Limited, Shenzhen, Guangdong 518118 (CN)
(72) Inventor: JIN, Peipei, Shenzhen, 518118 (CN); ZHANG, Meng, Shenzhen, 518118 (CN); WU, Yanzeng, Shenzhen, 518118 (CN); LIU, Yang, Shenzhen, 518118 (CN); HE, Kefeng, Shenzhen, 518118 (CN)
(74) Representative: Mathys & Squire

(57) **Abstract**

The present disclosure provides a separator. The separator comprises a first separator layer and a second separator layer in a stack. Solid electrolyte particles are dispersed in the first separator layer. lithium material-rich particles are dispersed in the second separator layer. The present disclosure further provides a battery including the separator described above and an electric device. The separator provided in the present disclosure not only improves high-temperature stability of the separator, but also improves low-temperature performance and an initial Coulombic efficiency of the battery.

## Description

### FIELD

The present disclosure relates to the field of battery technologies, and more specifically, to a separator, a battery, and an electric device.

### BACKGROUND

A polymer separator is a commonly used separator type for existing lithium-ion batteries. However, the heat resistance of the polymer separator is insufficient, and problems such as softening or thermal shrinkage under a high temperature condition easily occur, resulting in a short circuit by contact of a positive electrode and a negative electrode. In recent years, in some studies, performance of a separator is improved through blending inorganic particles and a polymer and extrusion. However, in fact, the addition of the inorganic particles limits improvement of the heat resistance of the polymer separator, and also leads to a reduction in tensile strength of the polymer separator. The addition of the inorganic particles reduces conductivity of the separator to lithium ions, and also affects wettability of electrolyte for the separator, which affects ionic conductivity of the separator, and increases internal resistance of the battery, leading to uneven deposition of the lithium ions and black spots, which is not conducive to capacity utilization of the battery at a low temperature. During initial formation of the battery, part of lithium salt is consumed to form a solid electrolyte interface (SEI) film, which reduces a concentration of lithium salt in the electrolyte, resulting in an irreversible capacity loss and a relatively small initial Coulombic efficiency of the battery.

### SUMMARY

To overcome a problem of electrochemical performance degradation as a result of presence of inorganic particles in existing polymer separators, the present disclosure provides a separator, a battery, and an electric device.

The technical solutions adopted in the present disclosure are to resolve the above technical problem are as follows.

In a first aspect, the present disclosure provides a separator. The separator comprises a first separator layer and a second separator layer in a stack. The first separator layer comprises solid electrolyte particles. The second separator layer comprises lithium material-rich particles.

Optionally, a particle size D50 of the solid electrolyte particles is in a range from 0.5 µm to 5 µm.

Optionally, the first separator layer further comprises a first porous polymer matrix layer. The solid electrolyte particles are dispersed in the first porous polymer matrix layer.

Optionally, based on a total weight of the first separator layer being 100%, a mass content of the first porous polymer matrix layer is in a range from 50 % to 90 %, and a mass content of the solid electrolyte particles is in a range from 10 % to 50 %.

Optionally, the first porous polymer matrix layer is selected from high density polyethylene, ultra-high density polyethylene, low density polyethylene, linear low density polyethylene, high density polypropylene, ultra-high density polypropylene, polyimide, or polyvinylidene fluoride.

Optionally, a thickness of the first separator layer is in a range from 1 µm to 20 µm, and/or a thickness of the second separator layer is in a range from 1 µm to 20 µm.

Optionally, a particle size D50 of the lithium material-rich particles is in a range from 0.5 µm to 5 µm.

Optionally, the solid electrolyte particles are selected from Li_{1.3}Al_{0.3}Ti_{1.7}(PO₄)₃, Li₇La₃Zr₂O₁₂, Li_{0.34}La_{0.56}TiO₃, or Li_{1.5}Al_{0.5}Ge_{1.5}(PO₄)₃; and/or the lithium material-rich particles are selected from Li₅FeO₄, Li₂Ni₅O₄, Li₂MnO₃, LiCoO₄, Li₆MnO₄, or LiReO₆.

Optionally, the second separator layer further comprises a second porous polymer matrix layer. The lithium material-rich particles are dispersed in the second porous polymer matrix layer.

Optionally, the second porous polymer matrix layer is selected from high density polyethylene, ultra-high density polyethylene, low density polyethylene, linear low density polyethylene, high density polypropylene, ultra-high density polypropylene, polyimide, or polyvinylidene fluoride.

Optionally, based on a total weight of the second separator layer being 100%, a mass content of the second porous polymer matrix layer is in a range from 90 % to 99 %, and a mass content of the lithium material-rich particles is in a range of 1% to 10%.

Optionally, a thickness of the separator is in a range from 2 µm to 40 µm.

Optionally, a pore size of the separator is in a range from 20 nm to 70 nm, and a porosity of the separator is in a range from 20 % to 70 %.

In a second aspect, the present disclosure provides a battery. The battery comprises a positive electrode, a negative electrode, and the separator described above. The separator is located between the positive electrode and the negative electrode.

Optionally, the first separator layer of the separator faces the negative electrode, and the second separator layer of the separator faces the positive electrode.

In a third aspect, the present disclosure provides an electric device. The electric device comprises the battery described above.

The separator provided in the present disclosure comprises the first separator layer with the solid electrolyte particles dispersed therein and the second separator layer with the lithium material-rich particles dispersed therein. The addition of the solid electrolyte particles and the lithium material-rich particles improves high-temperature stability of the separator. In addition, lattice defects and voids inside the solid electrolyte particles may realize the transmission of lithium ions, effectively improve the ion transmission capacity of the separator, reduce the internal resistance of the battery, and improve low temperature performance of the battery. However, the lithium material-rich particles can decompose and release the lithium ions under a high voltage condition, to replenish the battery with lithium in a formation stage, thereby effectively improving electrochemical performance of the separator while improving high-temperature resistance of the separator, and can replenish lithium in the battery formation stage, thereby increasing an initial Coulombic efficiency of the battery.

### BRIEF DESCRIPTION OF THE DRAWINGS

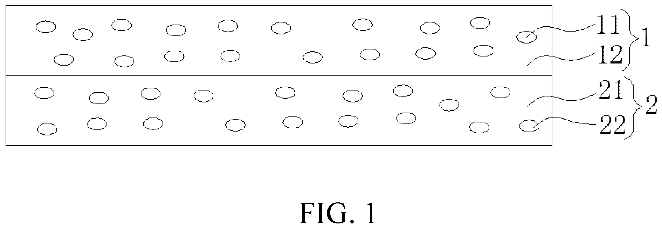

FIG. 1 is a schematic structural diagram of a separator according to the present disclosure.

### Reference numerals in the drawings of the specification are as follows:

1. First separator layer; 11. Solid electrolyte particle; 12. First porous polymer matrix layer; 2. Second separator layer; 21. lithium material-rich particles; 22. Second porous polymer matrix layer.

### DETAILED DESCRIPTION

To make the technical problems to be resolved in the present disclosure, technical solutions, and beneficial effects of the present disclosure clearer, the present disclosure is further described in detail below with reference to accompanying drawings and embodiments. It should be understood that the specific embodiments described herein are merely used for explaining the present disclosure rather than limiting the present disclosure.

As shown in FIG. 1, an embodiment of the present disclosure provides a separator. The separator comprises a first separator layer 1 and a second separator layer 2 in a stack. The first separator layer 1 comprises solid electrolyte particles 11. The second separator layer 2 comprises lithium material-rich particles 22.

The addition of the solid electrolyte particles 11 and the lithium material-rich particles 22 improves high-temperature stability of the separator. In addition, lattice defects and voids inside the solid electrolyte particles 11 may realize the transmission of lithium ions, effectively improve the ion transmission capacity of the separator, reduce the internal resistance of the battery, and improve low temperature performance of the battery. However, the lithium material-rich particles 22 can decompose and release the lithium ions under a high voltage condition, to replenish the battery with lithium in a formation stage, thereby effectively improving electrochemical performance of the separator while improving high-temperature resistance of the separator, and can replenish lithium in the battery formation stage, thereby increasing an initial Coulombic efficiency of the battery.

In some embodiments, a particle size D50 of the solid electrolyte particles 11 is in a range from 0.5 µm to 5 µm.

Particle size (D50) refers to a median particle size of the lithium-rich material particles, also known as the volume average particle size, indicating the corresponding particle size when the cumulative volume distribution percentage of the material reaches 50%. The particle size D50 of the material can be measured by a laser strength tester.

In different embodiments, the particle size D50 of the solid electrolyte particle 11 may be 0.5 µm, 0.8 µm, 1 µm, 1.2 µm, 1.5 µm, 1.8 µm, 2 µm, 2.2 µm, 2.5 µm, 2.8 µm, 3 µm, 3.2 µm, 3.5 µm, 3.8 µm, 4 µm, or 5 µm.

The particle size of the solid electrolyte particle 11 is related to a degree of dispersion of the solid electrolyte particles in the first separator layer 1. When the particle size of the solid electrolyte particle 11 is within the above range, the solid electrolyte particle has a larger particle size than a conventional inorganic filler, which may effectively avoid a problem of agglomeration between particles as a result of a van der Waals' force or electrostatic forcing, improve dispersion uniformity of the solid electrolyte particles 11 in the first separator layer 1, and improve consistency of performance of the first separator layer 1 in each area.

In some embodiments, the first separator layer 1 further comprises a first porous polymer matrix layer 12. The solid electrolyte particles 11 are dispersed in the first porous polymer matrix layer 12.

The first porous polymer matrix layer 12 is a main matrix structure for maintaining a shape and toughness of the first separator layer 1, and is also a main structure for forming a porous structure. The porous structure is permeable to an electrolyte, and a polymer material has affinity and wettability for the electrolyte, thereby ensuring ion exchange of the electrolyte on two sides of the separator.

In some embodiments, the first porous polymer matrix layer 12 is selected from high density polyethylene, ultra-high density polyethylene, low density polyethylene, linear low density polyethylene, high density polypropylene, ultra-high density polypropylene, polyimide, or polyvinylidene fluoride.

In some embodiments, based on a total weight of the first separator layer 1 being 100%, mass content of the first porous polymer matrix layer 12 is in a range from 50 % to 90 %, and mass content of the solid electrolyte particles 11 is in a range from 10 % to 50 %.

In some embodiments, a thickness of the first separator layer 1 is in a range from 1 µm to 20 µm.

In different embodiments, the thickness of the first separator layer 1 may be 1 µm, 3 µm, 5 µm, 7 µm, 8 µm, 10 µm, 11 µm, 13 µm, 15 µm, 17 µm, 18 µm, or 20 µm.

The first separator layer 1 is configured to improve ionic conductivity of the separator. When the thickness of the first separator layer 1 is within the above range, ion permeability of the separator may be effectively improved.

In some embodiments, a thickness of the second separator layer 2 is in a range from 1 µm to 20 µm.

In different embodiments, the thickness of the second separator layer 2 may be 1 µm, 3 µm, 5 µm, 7 µm, 8 µm, 10 µm, 11 µm, 13 µm, 15 µm, 17 µm, 18 µm, or 20 µm.

The second separator layer 2 provides an effect of lithium replenishment for the separator. When the thickness of the second separator layer 2 is within the above range, a proper amount of lithium may be provided, and impact on the ionic conductivity of the separator may be reduced.

In some embodiments, a particle size D50 of the lithium material-rich particles 22 is in a range from 0.5 µm to 5 µm.

In different embodiments, the particle size of the lithium material-rich particle 22 may be 0.5 µm, 0.8 µm, 1 µm, 1.2 µm, 1.5 µm, 1.8 µm, 2 µm, 2.2 µm, 2.5 µm, 2.8 µm, 3 µm, 3.2 µm, 3.5 µm, 3.8 µm, 4 µm, or 5 µm.

The particle size of the lithium material-rich particle 22 is related to a degree of dispersion of the lithium material-rich particles in the second separator layer 2. When the particle size of the lithium material-rich particle 22 is within the above range, the lithium material-rich particle has a larger particle size than a conventional inorganic filler, which may effectively avoid a problem of agglomeration between particles as a result of a van der Waals' forces or electrostatic forcing, improve dispersion uniformity of the lithium material-rich particles 22 in the second separator layer 2, and improve consistency of performance of the second separator layer 2 in each area.

In some embodiments, the solid electrolyte particle 11 is selected from Li_{1.3}Al_{0.3}Ti_{1.7}(PO₄)₃, Li₇La₃Zr₂O₁₂, Li_{0.34}La_{0.56}TiO₃, or Li_{1.5}Al_{0.5}Ge_{1.5}(PO₄)₃.

One of more of LATP (Li_{1.3}Al_{0.3}Ti_{1.7}(PO₄)₃), LLZO (Li₇La₃Zr₂O₁₂), LLTO (Li_{0.34}La_{0.56}TiO₃), and LAGP (Li_{1.5}Al_{0.5}Ge_{1.5}(PO₄)₃) are selected as the solid electrolyte particle 11, so that the solid electrolyte particle has advantages of high lithium-ion conductivity and thermal stability, which helps reduce internal resistance of the battery and improve battery safety.

In some embodiments, the lithium material-rich particle 22 is selected from Li₅FeO₄, Li₂Ni₅O₄, Li₂MnO₃, LiCoO₄, Li₆MnO₄, or LiReO₆.

One of more of Li₅FeO₄, Li₂Ni₅O₄, Li₂MnO₃, LiCoO₄, Li₆MnO₄, and LiReO₆ are selected as the lithium material-rich particle 22, so that the lithium material-rich particle has advantages of high lithium content and decomposition and release of lithium ions at a high voltage, which helps increase the initial Coulombic efficiency during battery formation.

In some embodiments, the second separator layer 2 further comprises a second porous polymer matrix layer 21. The lithium material-rich particles 22 are dispersed in the second porous polymer matrix layer 21.

The second porous polymer matrix layer 21 is a main matrix structure for maintaining a shape and toughness of the second separator layer 2, and is also a main structure for forming a porous structure. The porous structure is permeable to an electrolyte, and a polymer material has affinity and wettability for the electrolyte, thereby ensuring ion exchange of the electrolyte on two sides of the separator.

In some embodiments, the second porous polymer matrix layer 21 is selected from high density polyethylene, ultra-high density polyethylene, low density polyethylene, linear low density polyethylene, high density polypropylene, ultra-high density polypropylene, polyimide, or polyvinylidene fluoride.

In some embodiments, based on a total weight of the second separator layer 2 being 100%, mass content of the second porous polymer matrix layer is in a range from 90 % to 99 %, and mass content of the lithium material-rich particles 22 is in a range of 1% to 10%.

In some embodiments, a thickness of the separator is in a range from 2 µm to 40 µm.

When the thickness of the separator is within the above range, the separator can effectively block a positive electrode and a negative electrode while meeting the ion permeability and lithium replenishment performance, and has a specific puncture-proof mechanical strength.

In some embodiments, a pore size of the separator is in a range from 20 nm to 70 nm, and a porosity of the separator is in a range from 20 % to 70 %.

The pore size and the porosity of the separator not only affect electrolyte permeability of the separator, but also affect a blocking effect of the separator on the positive electrode and the negative electrode. When the pore size and the porosity of the separator are within the above ranges, a short circuit between the positive electrode and the negative electrode is prevented, and a self-discharge rate is reduced. In addition, the separator further has relatively good electrolyte permeability, thereby improving the ionic conductivity.

Another embodiment of the present disclosure provides a battery. The battery comprises a positive electrode, a negative electrode, and the separator described above. The separator is located between the positive electrode and the negative electrode.

Since the separator described above is used and has high ionic conductivity, impedance of the battery may be reduced, and a capacity retention ratio and a cycle life of the battery may be increased. In addition, the separator has an effect of lithium replenishment. When the battery is first formed, the lithium ions decomposed from the lithium material-rich particles 22 have a supplementary effect for a lithium ion concentration of the electrolyte, thereby reducing an irreversible capacity loss of the battery in the formation stage.

In some embodiments, the first separator layer 1 of the separator faces the negative electrode. The second separator layer 2 of the separator faces the positive electrode.

Since the lithium material-rich particles 22 are dispersed in the second separator layer 2, and the lithium material-rich particles 22 need to decompose at a high voltage (in a range of 3.5 to 4.1 v), the second separator layer 2 of the separator is oriented toward the positive electrode, which helps bring the second separator layer 2 into contact with the positive electrode, thereby promoting the decomposition of the lithium material-rich particles 22 in the second separator layer 2, and improving the lithium replenishment effect.

Another embodiment of the present disclosure provides an electric device. The electric device comprises the battery described above.

In some embodiments, the electric device is selected from an energy storage system, an electric vehicle, an electronic product, or an electric appliance.

The present disclosure is further described below through the embodiments.

### Embodiment 1

This embodiment provides a separator and a battery. The battery comprises a positive electrode, a negative electrode, and the separator. The separator comprises a first separator layer and a second separator layer in a stack. The first separator layer of the separator faces the negative electrode. The second separator layer of the separator faces the positive electrode. The first separator layer comprises a first porous polymer matrix layer and solid electrolyte particles dispersed in the first porous polymer matrix layer. The first porous polymer matrix layer is selected from polyvinylidene fluoride with a melting point of 155°C. Each of the solid electrolyte particles is selected from LLZO (Li₇La₃Zr₂O₁₂) with a particle size of 2.0 µm. The second separator layer comprises a second porous polymer matrix layer and lithium material-rich particles dispersed in the second porous polymer matrix layer. The second porous polymer matrix layer is selected from polyvinylidene fluoride with a melting point of 155°C. Each of the lithium material-rich particles is a selected from Li₅FeO₄ with a particle size of 1.5 µm. A thickness of the first separator layer is 4.5 µm. A thickness of the second separator layer is 4.5 µm. A total thickness of the separator is 9 µm.

### Embodiment 2

This embodiment provides a separator and a battery. The battery comprises a positive electrode, a negative electrode, and the separator. The separator comprises a first separator layer and a second separator layer in a stack. The first separator layer of the separator faces the negative electrode. The second separator layer of the separator faces the positive electrode. The first separator layer comprises a first porous polymer matrix layer and solid electrolyte particles dispersed in the first porous polymer matrix layer. The first porous polymer matrix layer is selected from ultra-high density polyethylene with a melting point of 135°C. Each of the solid electrolyte particles is selected from LATP(Li_{1.3}Al_{0.3}Ti_{1.7}(PO₄)₃) with a particle size of 2.0 µm. The second separator layer comprises a second porous polymer matrix layer and lithium material-rich particles dispersed in the second porous polymer matrix layer. The second porous polymer matrix layer is selected from ultra-high density polyethylene with a melting point of 135°C. Each of the lithium material-rich particles is a selected from LiCoO₄ with a particle size of 1.2 µm. A thickness of the first separator layer is 3.5 µm. A thickness of the second separator layer is 5.5 µm. A total thickness of the separator is 9 µm.

### Embodiment 3

This embodiment provides a separator and a battery. The battery comprises a positive electrode, a negative electrode, and the separator. The separator comprises a first separator layer and a second separator layer in a stack. The first separator layer of the separator faces the negative electrode. The second separator layer of the separator faces the positive electrode. The first separator layer comprises a first porous polymer matrix layer and solid electrolyte particles dispersed in the first porous polymer matrix layer. The first porous polymer matrix layer is selected from high density polypropylene with a melting point of 165°C. Each of the solid electrolyte particles is selected from LLZO (Li₇La₃Zr₂O₁₂) with a particle size of 2.0 µm. The second separator layer comprises a second porous polymer matrix layer and lithium material-rich particles dispersed in the second porous polymer matrix layer. The second porous polymer matrix layer is selected from high density polypropylene with a melting point of 165°C. Each of the lithium material-rich particles is a selected from Li₅FeO₄ with a particle size of 1.5 µm. A thickness of the first separator layer is 5 µm. A thickness of the second separator layer is 7 µm. A total thickness of the separator is 12 µm.

### Embodiment 4

This example provides a battery. The battery comprises most technical features as in Embodiment 2, and a difference is that the first separator layer of the separator faces the positive electrode, and the second separator layer of the separator faces the negative electrode.

### Comparative example 1

This comparative example provides a battery. The battery has a positive electrode, a negative electrode, and a commercially available separator (including a base film and an inorganic material layer arranged on the base film, the inorganic material being alumina) with a thickness of 12 µm.

### Performance test

### The battery obtained above is tested as follows:

Preparation of test batteries: The positive electrode is assembled with a negative electrode sheet to form the test batteries. The positive electrode sheet comprises a current collector (specifically an aluminum foil) and a positive electrode material layer arranged on the surface of the current collector. The positive electrode material layer contains LiFePO₄, a conductive agent, and a binder at a weight ratio of 96:2:2. The negative electrode sheet comprises a current collector (specifically a copper foil) and a negative electrode material layer arranged on the surface of the current collector. The negative electrode material layer contains graphite, a conductive agent, and a binder at a weight ratio of 95:3:2. The electrolyte solution is an organic solution containing 1.2 mol/L lithium hexafluorophosphate, where the solvent is DMC:EMC:DEC:EC at a weight ratio of 1:3:1:4.
1. Testing of initial Coulombic efficiency: The battery is charged to 3.75 V at a constant current and a constant voltage at 0.2 C, with a cutoff current of 0.05C, and is allowed to stand for 5 mins, and a charge capacity C1 is recorded. The battery is discharged to 2 V at a constant current at 0.5 C, and is allowed to stand for 5 mins, and a discharge capacity C2 is recorded. The initial Coulombic efficiency=C2/C1*100%.
2. Testing of low temperature ionic conductivity: A prepared battery is placed in a constant temperature box at -20 °C and warmed for 5 hours. Then ionic conductivity testing is performed according to the test method in GB-T36363 for ionic conductivity.
3. Low temperature cycling performance test: A prepared battery is placed in a constant temperature box at -10°C and warmed for 5h. Then the battery is charged and discharged at 0.5C/0.5C for 50 cycles. A first discharge capacity and a last discharge capacity are recorded, and a capacity retention ratio is calculated.
4. Testing of a battery capacity retention ratio: A battery is charged and discharged at 1C/1C for 500 cycles, and an authorized capacity and a capacity of 500 cycles of the battery are recorded. Capacity retention ratio of 500 cycles=500 cycles capacity/first cycle capacity* 100%.

The obtained test results are filled in Table 1.

**Table 1**

| | Embodiment 1 | Embodiment 2 | Embodiment 3 | Embodiment 4 | Comparativ e example 1 |
|---|---|---|---|---|---|
| Initial Coulombic efficiency (%) of the battery | 90.3 | 89.2 | 88.5 | 85.3 | 85.4 |
| Ionic conductivity (mS/cm) at -20°C | 0.73 | 0.71 | 0.67 | 0.70 | 0.53 |
| Capacity retention ratio (%) of 50 cycles of the battery at -10°C | 90.32 | 90.12 | 90.91 | 85.34 | 84.89 |
| Capacity retention ratio (%) of 500 cycles | 95.4 | 95.2 | 94.7 | 91.2 | 90.3 |

It may be learned from the test results in Table 1 that the separator provided in the present disclosure improves the ionic conductivity, and reduces the internal resistance of the battery, thereby improving low-temperature cycling performance and the cycle life of the battery. In addition, the separator has an effect of lithium replenishment, which reduces an irreversible capacity loss during battery formation, and improves the initial Coulombic efficiency of the battery. In addition, it may be learned from the test results of Embodiment 2 and Embodiment 4 that the orientation of the separator between the positive electrode and the negative electrode affects the effect of improvement of the separator on the battery performance. When the first separator layer faces the negative electrode and the second separator layer faces the positive electrode, the capacity retention ratio in the cycle of the battery and the low-temperature performance can be further improved, and the initial Coulombic efficiency of the battery can also be increased.

The above descriptions are merely preferred embodiments of the present disclosure, and are not intended to limit the present disclosure. Any modification, equivalent replacement, and improvement made within the spirit and principle of the present disclosure shall fall within the protection scope of the present disclosure.

## Claims

1. A separator, comprising a first separator layer and a second separator layer in a stack, the first separator layer comprising solid electrolyte particles, and the second separator layer comprising lithium material-rich particles.

2. The separator according to claim 1, wherein a particle size D50 of the solid electrolyte particles is in a range from 0.5 µm to 5 µm.

3. The separator according to claim 1 or 2, wherein the first separator layer further comprises a first porous polymer matrix layer; and the solid electrolyte particles are dispersed in the first porous polymer matrix layer.

4. The separator according to claim 3, wherein based on a total weight of the first separator layer being 100%, a mass content of the first porous polymer matrix layer is in a range from 50 % to 90 %, and a mass content of the solid electrolyte particles is in a range from 10 % to 50 %.

5. The separator according to claim 3 or 4, wherein the first porous polymer matrix layer is selected from high density polyethylene, ultra-high density polyethylene, low density polyethylene, linear low density polyethylene, high density polypropylene, ultra-high density polypropylene, polyimide, or polyvinylidene fluoride.

6. The separator according to any one of claims 1 to 5, wherein a thickness of the first separator layer is in a range from 1 µm to 20 µm; and/or a thickness of the second separator layer is in a range from 1 µm to 20 µm.

7. The separator according to any one of claims 1 to 6, wherein a particle size D50 of the lithium material-rich particles is in a range from 0.5 µm to 5 µm.

8. The separator according to any one of claims 1 to 7, wherein the solid electrolyte particles are selected from Li_{1.3}Al_{0.3}Ti_{1.7}(PO₄)₃, Li₇La₃Zr₂O₁₂, Li_{0.34}La_{0.56}TiO₃, or Li_{1.5}Al_{0.5}Ge_{1.5}(PO₄)₃; and/or the lithium material-rich particles are selected from Li₅FeO₄, Li₂Ni₅O₄, Li₂MnO₃, LiCoO₄, Li₆MnO₄, or LiReO₆.

9. The separator according to any one of claims 1 to 8, wherein the second separator layer further comprises a second porous polymer matrix layer; and the lithium material-rich particles are dispersed in the second porous polymer matrix layer.

10. The separator according to claim 9, wherein the second porous polymer matrix layer is selected from high density polyethylene, ultra-high density polyethylene, low density polyethylene, linear low density polyethylene, high density polypropylene, ultra-high density polypropylene, polyimide, or polyvinylidene fluoride.

11. The separator according to any one of claims 9 or 10, wherein based on a total weight of the second separator layer being 100%, a mass content of the second porous polymer matrix layer is in a range from 90 % to 99 %, and a mass content of the lithium material-rich particles is in a range of 1% to 10%.

12. The separator according to any one of claims 1 to 11, wherein a thickness of the separator is in a range from 2 µm to 40 µm.

13. The separator according to any one of claims 1 to 12, wherein a pore size of the separator is in a range from 20 nm to 70 nm; and a porosity of the separator is in a range from 20 % to 70 %.

14. A battery, comprising a positive electrode, a negative electrode, and the separator according to any of claims 1 to 13, the separator being located between the positive electrode and the negative electrode, preferably wherein the first separator layer of the separator faces the negative electrode; and the second separator layer of the separator faces the positive electrode.

15. An electric device, comprising the battery according to claim 14.
